# EUROPEAN PATENT SPECIFICATION

(11) **EP 4 484 999 B1**
(45) Date of publication and mention of the grant of the patent: **26.08.2026**
(21) Application number: 23181381.7
(22) Date of filing: 26.06.2023
(51) Int. Cl.: G01S 7/40, G01S 7/497, G01S 7/52, G01S 13/931, G01S 15/931

(54) **METHOD AND APPARATUS FOR CALIBRATING AN ENVIRONMENTAL SENSOR**
VERFAHREN UND VORRICHTUNG ZUR KALIBRIERUNG EINES UMGEBUNGSSENSORS
PROCÉDÉ ET APPAREIL D'ÉTALONNAGE D'UN CAPTEUR ENVIRONNEMENTAL

(43) Date of publication of application: 01.01.2025
(73) Proprietor: KNORR-BREMSE Systeme für Nutzfahrzeuge GmbH, 80809 München (DE)
(72) Inventor: BATAI, Andras, 7623 Pecs (HU); SZÖLLOSI, Adam, 1119 Budapest (HU); NEMETH, Huba, 1116 Budapest (HU); GYURKO, Zoltán, 1047 Budapest (HU); KOMLOS, Tamas, 6448 Csavoly (HU); SZOKOL, Tamas, 1112 Budapest (HU); MERZA, Valér, 2000 Szentendre (HU); ZÖLDHEGYI, Valter, 2049 Diósd (HU); DUDAS, Zsolt, 6728 Szeged (HU)

(56) References cited:
- KR-A- 20170 059 029
- US-A1- 2015 153 444
- US-A1- 2016 025 489
- US-A1- 2020 033 444

## Description

The present invention relates to a method and an apparatus for calibrating an environmental sensor of a vehicle, to an environmental sensor system, to a vehicle, to a computer-readable storage device and, in particular, to a perception sensor calibration adjustment.

Vehicles and especially commercial vehicles such as trucks, towing vehicles and trailers are often equipped with multiple environmental sensors to monitor the surrounding of the vehicle. The field of view of these sensors can be any direction, i.e. the forward direction or rearward direction or the lefthand side or righthand side. For example, a camera may be installed behind a windshield of a cabin to allow forward view and other sensors may be installed at other positions of a commercial vehicle to enable a preferably complete surround view. The surveillance areas of all sensors may overlap to ensure that no objects are overseen.

For example, US 2016/025489 A1 discloses a position reference system and method for positioning and tracking one or more objects. KR 2017 0059029 A discloses an apparatus and a method for predicting a pitch motion of a vehicle body. US 2020/033444 A1 discloses a vehicle radar system arranged to detect objects outside a vehicle. US 2015/153444 A1 discloses a device and methods for detecting data points based on radar scanning.

These sensors are usually installed on fixed positions of the vehicle so that they cannot move relative to the vehicle. With the known fixed position, these sensors can be calibrated so that the coordinates of the sensor (e.g. the pixels of a camera image) can be transformed into a coordinate system of the world surrounding the vehicle (with a fixed relationship to ground). However, the fixed positions of environmental sensors are often suspended vehicle components (e.g. a cabin of a commercial vehicle or a vehicle body) so that the environmental sensor(s) do not have always a fixed relationship relative to ground but are subject to relative movements. As consequence, the calibration is not always valid or becomes at least inaccurate. Furthermore, when the coverage of sensors overlap, sensor data from the overlapping regions may become distorted due to the movements relative to ground.

Therefore, there is a demand for ensuring a correct the calibration of environmental sensors during operation of a vehicle.

At least some of the above-mentioned problems are overcome by a method according to claim 1 and an apparatus according to claim 7. The dependent claims refer to particular advantageous realizations of the subject matters of the independent claims.

The present invention relates to a method for calibrating of an environmental sensor of a vehicle. The environmental sensor is mounted on a vehicle component subject to a vertical or tilting movement relative to ground and is configured to provide sensor data.

The method comprises:
- receiving movement information indicative of the vertical or tilting movement; and
- calibrating the environmental sensor based on the received information to compensate modifications in the sensor data due the vertical or tilting movement.

The environmental sensor may be pre-calibrated for a predetermined mounting position on the vehicle, the pre-calibration may be associated with calibration parameter.

Optionally, the step of calibrating includes a step of adjusting the calibration parameter to compensate the modifications in the sensor data due to the vertical or tilting movement.

The vehicle in its environment may be describable by environmental data in a vehicle coordinate system having a fixed relationship to ground. Then, optionally, the step of receiving may include receiving raw sensor data as environmental data in a sensor coordinate system (e.g. image data). The step of calibrating may then include:
- a step of transforming the raw sensor data in the sensor coordinate system into the environmental data in the vehicle coordinate system or, vice versa,
- a step of transforming the environmental data in the vehicle coordinate system into the environmental data in the sensor coordinate system.

The sensor coordinate system may refer to the plurality of pixels arranged in rows and columns. Thus, the coordinates of a given point of an image is the respective row and column of the pixel of that point.

Within the present disclosure, the calibration can be seen as the determination of a plurality of calibration parameters that allow to determine the actual position of an object in the surrounding of vehicle based on the image data (raw sensor data). For example, the calibration parameters are the information needed to determine a position of the object detected by sensor in the vehicle coordinate system relative to the vehicle. Therefore, after calibration the distance from the vehicle and/or an azimuth angle of the object in the surrounding can be determined based on the captured image.

Optionally, the received information in the step of receiving includes at least one of the following information: one or more tilting angles of the vehicle component (e.g. measured from the vertical axis), a shift in height over ground, another shift relative to another vehicle component, other information change upon movements.

Optionally, the step of receiving includes receiving information from at least one of the following: a levelling sensor, one or more acceleration sensors, a suspension sensor, a load sensor, an inertial measurement unit (IMU), the environmental sensor, another environmental sensor, a positioning system (e.g. a global positioning system, GPS), a database (e.g. indicating a coupling height of trailer or a current load).

Optionally, the method further includes at least one of the following:
- monitoring, during operating the vehicle, a position of the vehicle component,
- detecting the vertical or tilting movement(s) of the vehicle component relative to ground when one or more predetermined thresholds are exceeded,
- upon detecting the movement, repeating the steps of receiving and calibrating the environmental sensor.

Accordingly, during braking and/or acceleration events, the calibration can be corrected to compensate a tilting or other movements occurring (only) during such events.

Thereafter, the method may return to the former calibration (before the event occurred).

The vehicle is a truck or a towing vehicle or a trailer or a vehicle combination with a towing vehicle and a trailer. According to the invention, the steps receiving information and calibrating the environmental sensor are carried out at one or more of the following events:
- coupling the trailer to the towing vehicle,
- loading the trailer or the truck,
- changing a suspension of at least one tire or axle of the vehicle,
- lifting or lowering at least one tire of the vehicle, and optionally
- braking or accelerating the vehicle.

It is understood that the order of the method steps as described before can be different.

Embodiments relate also to an apparatus for calibration of an environmental sensor of a vehicle, wherein the environment sensor is configured to provide sensor data and is mounted on a vehicle component that is able to perform a vertical or tilting movement relative to ground (e.g. due to suspension). The apparatus comprises a reception module configured to receive information indicative of the vertical or tilting movement; and a calibration module configured to calibrate the environmental sensor based on the received information to compensate modifications in the sensor data due the vertical or tilting movement. The calibration may again be associated with a determination of calibration parameters.

The apparatus can be any control unit mountable or already being installed on the vehicle and which is configured to process sensor data from the environmental sensor. It is further understood that all steps of the method as described before can be implemented as further optional features in the apparatus.

Embodiments relate also to an environmental sensor system for a vehicle with an environmental sensor and an apparatus as described before.

Optionally, the environmental sensor is at least one of the following: one or more cameras, one or more radars, one or more Lidars, one or more ultrasonic sensors.

Further embodiments relate to a vehicle with an environmental sensor system as described before. The vehicle may be a commercial vehicle including at least one of a truck, a bus, a towing vehicle, a trailer, a vehicle combination with a towing vehicle and a trailer. The environmental sensor may be installed on the trailer or on the towing vehicle. Likewise, the apparatus may be installed on the trailer or on the towing vehicle.

The method and functions of the apparatus may also be implemented in software or a computer program product. For example, embodiments may be implemented by software or a software module in any electronic control unit of the vehicle. Therefore, embodiments relate also to a computer program having a program code for performing the method when the computer program is executed on a processor. Further embodiments relate to a computer-readable storage device having a software stored thereon and designed to carry out the method as described before, when the computer program is executed on an apparatus as described before or another data processing unit.

Important aspect of embodiments can be summarized as follows. The above-mentioned problems of conventional systems are overcome by a calibration (or a re-calibration) of an environmental sensor based on information obtained/derived from other sources such as another sensor (not necessarily an environmental sensors). The obtained information may indicate a position (or its changes) of the vehicle component relative to ground. For example, the vertical position and/or an angular position (e.g. a tilt) of a vehicle component such as the chassis can be monitored by dedicated sensors and can thus be utilized to correct a ground specific calibration of the environmental sensor mounted on a suspended vehicle component. The environmental sensor may be already installed on the vehicle. This (re-) calibration - based on the received additional information - may modify or correct the position and/or angle shown by the environmental sensor relative to the road (ground). Consequently, the environmental sensor is still able to provide correct sensor data to a driver or to a processing unit to assist or to autonomously operate the vehicle.

Advantageously, embodiments are able to take into account various movements of the vehicle component relative to ground. These relative movements may relate to different loadings of a trailer resulting in vertical upward/downward movements of the vehicle/trailer or resulting in a tilting of the towing vehicle. Likewise, any deviations in (raw) sensor data due to a tilting occurring during braking/accelerating the towing vehicle can be compensated. Further modifications of the relative positions relate to a lifting of some of the tires/axles of the trailer resulting in a vertical movement of the trailer. Yet another situation taken into account by embodiments relates to an inhomogeneous loading of the trailer, resulting in a tilting of the trailer and/or a tilting of the towing vehicle. Finally, also different coupling points between the towing vehicle and the trailer may result in a tilting of the trailer and/or towing vehicle.

Embodiments are able to consider all these modifications and provide a corrected calibration depending on the concrete situation. These modified calibrations can be provided either to the driver in the form of corrected visual images. In addition, the corrected calibration can also be provided to a drive assist system in the vehicle, for example when the vehicle performs an automated or an autonomous driving for which the vehicle needs very accurate sensor data specifying any objects moving in the surroundings of the vehicle.

Some examples of the systems and/or methods will be described in the following by way of examples only, and with respect to the accompanying figures, in which:
- Fig. 1A: depicts a schematic flow diagram of a method for calibrating an environments sensor according to an embodiment of the present invention.
- Fig. 1B: shows an exemplary vehicle with multiple environment sensors that are calibrated according to embodiments.
- Fig. 2: illustrates the image (sensor) coordinate system and the vehicle coordinate system usable according to embodiments.
- Figs. 3A,3B: show details for transformations in the process of the calibration according to embodiments.

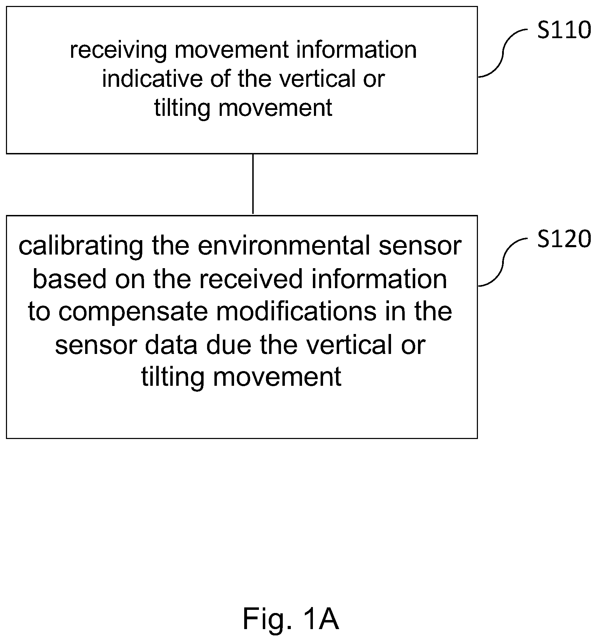

**Fig. 1A** depicts a schematical flow diagram of a method for calibrating an environmental sensor. The method comprises the steps of:
- receiving S110 movement information indicative of the vertical or tilting movement; and
- calibrating S120 the environmental sensor based on the received information to compensate modifications in the sensor data due to the vertical and/or tilting movement.

This method may also be a computer-implemented method. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

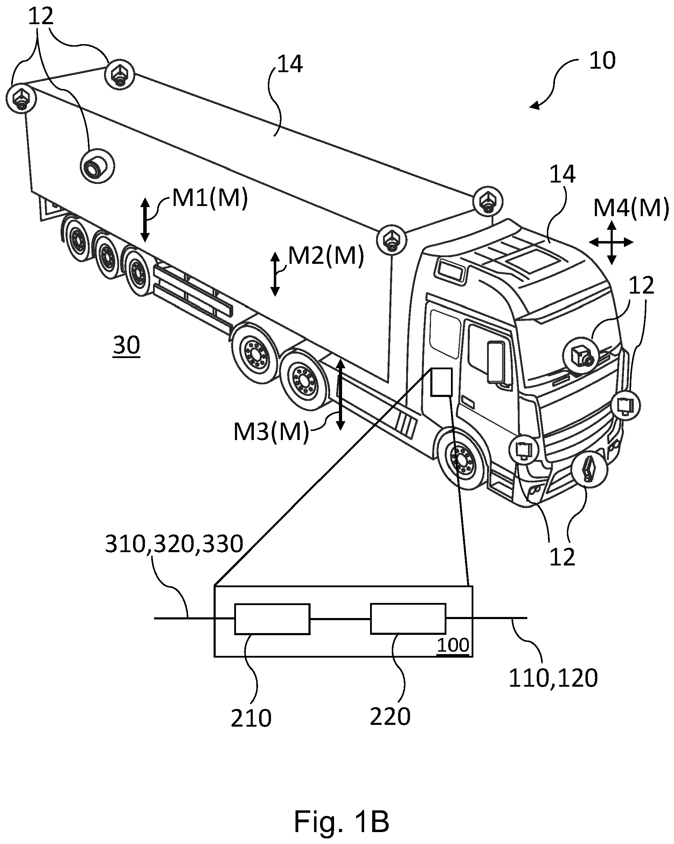

**Fig. 1B** shows an exemplary vehicle 10, which may be a truck, a towing vehicle, a trailer or the depicted vehicle combination including a towing and a towed vehicle. The vehicle 10 comprises various vehicle components 14 such as a cabin or a trailer body on which one or more environmental sensors 12 can be mounted at different locations. The environmental sensor(s) 12 may include one or more cameras, one or more Lidar sensors, one or more radar sensors, one or more ultrasonic sensors or any combination thereof. The vehicle components 14 are suspended so that they may perform movements M relative to ground 30. These movements M may include vertical height changes M1, M2, M3 and/or tilting motions M4 and may in turn change the positions of the environmental sensors 12 mounted on the vehicle components 14.

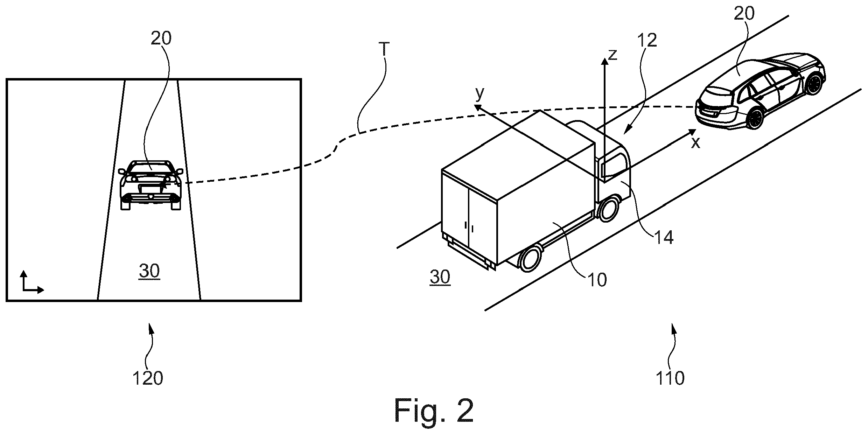

There are various causes for these movements. For example, a load on the trailer 14 may change resulting not only in vertical movements M1, M2 of the trailer, but may also cause a tilting M4 of the cabin and/or the trailer (especially if the load is not homogeneously distributed). Similarly, an axle of the trailer may be lifted resulting in vertical movements M1. Or, a coupling point between trailer und tractor (towing vehicle) may be lower or higher resulting in vertical/tiling movements M3 of the trailer. Moreover, a controllable air suspension may be changed resulting in vertical movements M1 of the trailer or vertical movements M2 of the tractor. Finally, also a braking or an acceleration the vehicle 10 generally cause significant tilting movements M4. These are only some exemplary movements M. There are many other movements conceivable that change also the position of the sensors 12. For example, when referring to vehicle combinations 10 as shown in Fig. 2 both the towing vehicle and the towed vehicle will be subject of movements M (M1, M2, ..) during (un-) loading the trailer. For example, if the trailer is more heavily loaded, the relative height position of sensors 12 installed on the trailer may change and the cabin may slightly tilt. Likewise, a tilting may also be caused by a change in suspension height (for example by leveling of air springs).

The environmental sensors 12 will generally installed on fixed, predetermined positions of the vehicle 10 such as behind the windshield of the cabin, corner portions of the trailer and/or tractor, rear side of the trailer, front side of the cabin or tractor etc. Since the sensors 12 cannot move relative to the vehicle 10, each of these sensors 12 can be calibrated for its fixed position implying that sensor coordinates (e.g. the pixels of a camera image) can be transformed into a vehicle coordinate system of the world surrounding the vehicle 10 (with a fixed relationship to ground 30). In this way, sensor coordinates of objects detected by the sensors 12 can be transformed into the coordinate system around the vehicle 10. This way, a distance or an angle between an exemplary object and the vehicle 10 can be calculated. This calibration is associated with calibration parameter that depend on the relative position of the sensor 12 with respect to ground 30.

However, when the above-mentioned movements M occur, the (perceptional) sensors 12 may need another calibration to operate correctly. Embodiments overcome this by (re-) calibrating the sensor 12 taking into account the relative movements M of the vehicle 10, thereby compensating the effect of the relative movements M. As a result, embodiments can use the sensors 12 for determining relative positions of an object with respect to the vehicle 10 - even during movements M.

To achieve this, the vehicle 10 includes an apparatus 100 with a reception module 210 for receiving movement information 310 indicative of the vertical and/or tilting movement M and a calibration module 220 for calibrating the environmental sensor 12 based on the received information 310 to compensate the modifications in the sensor data 330 due the vertical or tilting movement M. The apparatus 100 may further receive as input calibration parameters 320 and the raw sensor data 330 and outputs modifications that compensate the modifications due to the movements M. Initially determined calibration parameters may thus be adapted to take into account the relative movements M and to ensure that the calibration remains valid and accurate. These adapted calibration parameters are usable to correct a transformation T between a vehicle coordinate system 110 and a sensor coordinate system 120 as described in more detail below.

According to embodiments, the relative movements M are derived from other sensors that are able to be directly measure or to calculate or to estimate the relative movements M based on sensor data. For example, the vehicle's vertical position can be measured directly with leveling sensors. Tilting angles can be calculated from measured vertical positions (or their changes) at different positions (e.g. axles). Taking into account the known position of the sensor(s) 12 embodiments can thus calculate the local changes at the position(s) of the sensor(s) 12.

Additionally or alternatively, vertical movements M and/or tilt angles may be measured with sensors such as an accelerometer, an inertial measurement unit (IMU), a global positioning system (GPS) or any kind of force sensor, because any movement is caused by a force. Again, these measurements can be carried out at different locations and the results can be combined to obtain an accurate position and orientation of the vehicle component(s) 14 and the mounted environmental sensor(s) 12 relative to ground 30 or the road.

According to embodiments, the information about the changed position of the vehicle component 14 or its changed tilt angles will be used to modify the calibration transformation so that the image data from the sensors 12 can be used to determine the positions of the object in the world around the vehicle 10.

**Fig.** 2 illustrates the transformation T between the two coordinate systems for an object 20 being present in the surrounding of the vehicle 10 (given as a truck in this embodiment) both traveling along a road as ground 30. On the left-hand side, Fig. 2 shows an exemplary camera image 330 (raw sensor data). The depicted camera image may be associated with environmental data in a sensor coordinate system 120 describing each point on the image with two coordinates. For example, the camera image may build up by a plurality of pixels arranged, for example, in "n" lines and "m" columns so that each position on the camera image can be identified by using these integer numbers (n, m) as image coordinates.

The exemplary camera image may be combined with distance information derived another sensor (e.g. a radar, lidar) or from a stereo image and may be transformed into environmental data in the vehicle coordinate system 110 illustrated on the right-hand side of Fig. 2. The vehicle coordinate system 110 has a fixed relationship relative to ground 30 or the road and may be defined by three coordinates x (longitudinal direction or driving direction), y lateral direction, and z vertical direction. However, since the object moves on ground, there are effectively also only two coordinates describing the world in the vehicle coordinate system 110.

The transformation T is based on the calibration carried out in step S120 in the method of Fig. 1A and uses at least the correct mounting position of the exemplary camera sensor 12 at the vehicle 10. In addition, according to embodiment, any change of the position due to horizontal and/or tilting movements M are taken into account to improve the calibration or making it more accurate.

According to further embodiments, the object 20 may be another vehicle (peer object) or any other moving object or static object such as pedestrians, bicycles, trees, houses etc. The vehicle 10 can be seen as an ego vehicle and is this embodiment a single truck (without a trailer), but with a loading area. The environmental sensor 12 producing the image as shown in the left-hand side may be a camera with a forward-looking field of view mounted to a front portion of the cabin as vehicle component 14. The transformation T can be used to determine the location of the object 20 in the real world surrounding the vehicle 10. Thus, the distance between the object 20 and the vehicle 10 can be obtained directly, e.g., as the x-value of object 20 in the vehicle coordinate system 110.

According to embodiments, the scenery (i.e. the vehicle 10 within its surrounding) can be described using environmental data of either coordinate system 110, 120, i.e. the scenery can either be seen from an overview (as vehicle coordinate system 110), or the scenery can be viewed from the perspective of the sensor 12 (e.g. through the lens of the camera). Therefore, embodiments refer to forward transformation T, where the vehicle coordinate system 110 is utilized. Further embodiments refer to the backward transformation T⁻¹ (inverse forward transformation T), where the sensor coordinate system 120 is utilized.

It is apparent from Fig. 2, if the cabin 14 together with the sensor 12 tilts backward (e.g. caused by loading the truck) the object 20 will move down on the image on the left-hand side. Similarly, the object 20 will move up on the image when the cabin 14 tilts forward (e.g. caused by braking). However, one cannot infer from this that the object 20 has actually moved. For example, the distance from the vehicle 10 to the object 20 may not have changed - although the image data indicate a change. Therefore, the movements M as described in Fig. 1B will affect the image 330 taken by the sensor 14 and embodiments will correct this misinformation and always provide the correct information in either coordinate system (even though the raw sensor data 330 change).

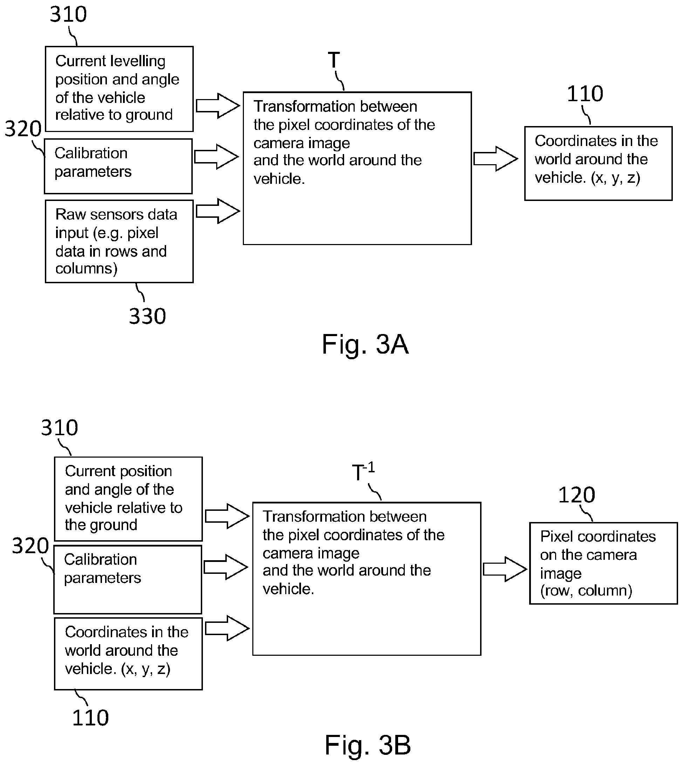

**Fig. 3A** illustrates further the forward transformation T, i.e. from perspective shown on the left-hand side in Fig. 2 to the perspective shown on the right-hand side. Then, the vehicle coordinate system 110 is utilized as primary coordinate system. Based on the movement information 310, the calibration parameters 320, and the raw sensor data 330, the transformation T is performed between the pixel coordinates (environmental data in the sensor coordinate system 120) of the camera image into the world around the vehicle (vehicle coordinate system 110). The output of the transformation T is the scenery seen from the vehicle coordinate system 110. Therefore, the output is the captured objects (environmental data) in the coordinates (x, y, z) associated with the world around the vehicle 10. The movement information 310 may include the current leveling position and angle of the vehicle 10 relative to ground 310 and the raw sensor data 330 may include pixel data arranged in rows and columns. The transformation T can be performed by a processing unit such as the apparatus 100.

**Fig. 3B** shows the backward transformation T⁻¹ implying an inverse transformation from environmental data in the vehicle coordinate system 110 into the sensor coordinate system 120. Now, the movement information 310 such as the current leveling position and angle of the vehicle 10, the calibration parameters 320, and the environmental data of the scenery in the vehicle coordinate system 110 are input quantities. There, the captured objects is parametrized in the coordinates x, y, z associated with the world around the vehicle 10. The backward transformation T⁻¹ calculates as output the scenery (environmental data) parametrized in the pixel coordinates 120 (sensor coordinate system). Thus, a camera image such as pixels in rows and columns is generated.

Therefore, according to embodiments, the transformations T in both directions are adjusted, i.e. from the vehicle coordinate system into the sensor coordinate system and vice versa. Thus, it is possible to calculate in which area of the sensor field of view 120 the object 20 should appear. For this, the location/distance of the object 20 to the vehicle 10 may be obtained from other sources or other sensors.

Further advantageous embodiments relate to a calibration adjustment method for environment perception sensors equipped to a vehicle 10 which includes a transformation T considering the actual vertical and/or levelling position and/or tilt angle of the vehicle 10 relative to the ground 30 as an input.

According to further embodiments, the calibration adjustment method includes a transformation considering the current vertical and/or levelling position and/or tilt angle of the vehicle for a forward transformation T (sensor coordinates to vehicle coordinates).

According to further embodiments, the calibration adjustment method includes a transformation that considers the current vertical and/or levelling position and/or tilt angle of the vehicle for the backward transformation T⁻¹ (vehicle coordinates to sensor coordinates).

According to further embodiments, the calibration adjustment method utilizes as environment perception sensor a camera and/or Lidar and/or a radar and/or ultrasonic sensor (or multiples thereof).

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: vehicle (truck, towing vehicle, trailer)
- 12: environmental (perceptional) sensor
- 14: vehicle component
- 20: (peer) object
- 30: ground (e.g. road)
- 110: environmental data in a vehicle coordinate system
- 120: environmental data in a sensor coordinate system
- 210: reception module
- 220: calibration module
- 310: movement information (e.g. levelling, one or more angles)
- 320: calibration parameter
- 330: raw sensor data
- M (M1, M2, ..).: vertical and/or tilting movement(s)
- T: transformation between vehicle and sensor coordinate systems

## Claims

1. A method for calibrating of an environmental sensor (12) of a vehicle (10), the environmental sensor (12) being mounted on a vehicle component (14) subject to a vertical or tilting movement (M) relative to ground (30) and configured to provide sensor data (330), wherein the vehicle (10) is a truck or a towing vehicle or a trailer or a vehicle combination with a towing vehicle and a trailer,
**characterized by:**
- receiving (S110) movement information (310) indicative of the vertical or tilting movement (M); and
- calibrating (S120) the environmental sensor (12) based on the received information (310) to compensate modifications in the sensor data (330) due the vertical or tilting movement (M),
wherein the steps receiving (S110) information and calibrating (S120) the environmental sensor (12) are carried out at one or more of the following events:
- coupling the trailer to the towing vehicle,
- loading the trailer or the truck,
- changing a suspension of at least one of tire or axle of the vehicle (10),
- lifting or lowering at least one tire of the vehicle (10).

2. The method according to claim 1, wherein the environmental sensor (12) is pre-calibrated for a predetermined mounting position on the vehicle (10), the pre-calibration being associated with calibration parameter (320),
**characterized in that**
the step of calibrating (S120) includes a step of adjusting the calibration parameter (320) to compensate the modifications in the sensor data (330) due to the vertical or tilting movement (M).

3. The method according to claim 1 or of claim 2, wherein the vehicle in its environment is describable by environmental data in a vehicle coordinate system (110) having a fixed relationship to ground (30),
**characterized in that**
the step of receiving (S110) includes receiving raw sensor data (330) as environmental data in a sensor coordinate system (120); and
the step of calibrating (S120) includes:
- a step of transforming of the raw sensor data (330) in the sensor coordinate system (120) into the environmental data in the vehicle coordinate system (110) or, vice versa,
- a step of transforming the environmental data in the vehicle coordinate system (110) into the environmental data in the sensor coordinate system (120).

4. The method according to any one of claims 1 to 3,
**characterized in that**
the received information (310) in the step of receiving (S110) includes at least one of the following: one or more tilting angles of the vehicle component (14), a shift in height over ground (30), another shift relative to another vehicle component.

5. The method according to any one of claims 1 to 4,
**characterized in that**
the step of receiving (S110) includes receiving information from at least one of the following: a levelling sensor, one or more acceleration sensors, a suspension sensor, a load sensor, an inertial measurement unit, the environmental sensor, another environmental sensor, a positioning system, a database.

6. The method according to claim 5,
**characterized by**
- monitoring, during operating the vehicle (10), a position of the vehicle component (14);
- detecting the vertical or tilting movements (M) of the vehicle component (14) relative to ground (30) exceeding a predetermined threshold; and
- upon detecting the movement (M), repeating the steps of receiving (S110) and calibrating (S120) the environmental sensor (12).

7. An apparatus (100) for calibration of an environmental sensor (12) of a vehicle (10), the environment sensor (12) configured to provide sensor data (330) and being mounted on a vehicle component (14) that is able to perform a vertical or tilting movement (M) relative to ground (30),
**characterized by:**
- a reception module (210) configured to receive information (310) indicative of the vertical or tilting movement (M); and
- a calibration module (220) configured to calibrate the environmental sensor (12) based on the received information (310) to compensate modifications in the sensor data (330) due the vertical or tilting movement (M).

8. An environmental sensor system for a vehicle (10),
**characterized by:**
- an environmental sensor (12); and
- an apparatus (100) according to claim 7.

9. The environmental sensor system according to claim 8,
**characterized in that**
the environmental sensor (10) is at least one of the following: one or more cameras, one or more radars, one or more Lidars, one or more ultrasonic sensors.

10. A vehicle (10)
**characterized by:**
an environmental sensor system according to claim 8 or claim 9.

11. The vehicle (10) according to claim 10, wherein the vehicle is a commercial vehicle including at least one of the following: a truck, a towing vehicle, a trailer, a vehicle combination with a towing vehicle and a trailer,
**characterized in that**
the environmental sensor (12) is installed on the trailer or on the towing vehicle, and the apparatus (100) is installed on the trailer or on the towing vehicle.

12. A computer-readable storage device having a software stored thereon and designed to carry out the method as claimed in any one of claims 1 to 6, when the computer program is executed on an apparatus according to claim 8.

## Patentansprüche

1. Verfahren zum Kalibrieren eines Umgebungssensors (12) eines Fahrzeugs (10), wobei der Umgebungssensor (12) an einem Fahrzeugbauteil (14) montiert ist, das einer vertikalen oder Neigungsbewegung (M) im Verhältnis zum Boden (30) unterliegt, und dafür konfiguriert ist, Sensordaten (330) zu liefern, wobei das Fahrzeug (10) ein Lastkraftwagen oder ein Zugfahrzeug oder ein Anhänger oder eine Fahrzeugkombination mit einem Zugfahrzeug und einem Anhänger ist,
**gekennzeichnet durch:**
- Empfangen (S110) von Bewegungsinformationen (310), die auf die vertikale oder Neigungsbewegung (M) hinweisen; und
- Kalibrieren (S120) des Umgebungssensors (12) auf Grundlage der empfangenen Informationen (310) zum Ausgleichen von Modifikationen bei den Sensordaten (330) aufgrund der vertikalen oder Neigungsbewegung (M),
wobei die Schritte des Empfangens (S110) von Informationen und des Kalibrierens (S120) des Umgebungssensors (12) bei einem oder mehreren der folgenden Ereignisse ausgeführt werden:
- Ankuppeln des Anhängers an das Zugfahrzeug,
- Beladen des Anhängers oder des Lastkraftwagens,
- Ändern einer Aufhängung mindestens eines von einem Reifen oder einer Achse des Fahrzeugs (10),
- Anheben oder Absenken mindestens eines Reifens des Fahrzeugs (10).

2. Verfahren nach Anspruch 1, wobei der Umgebungssensor (12) für eine vorbestimmte Montageposition am Fahrzeug (10) vorkalibriert ist, wobei die Vorkalibrierung mit einem Kalibrierungsparameter (320) verknüpft ist,
**dadurch gekennzeichnet, dass**
der Kalibrierungsschritt (S120) einen Schritt des Anpassens des Kalibrierungsparameters (320) einschließt, um die Modifikationen bei den Sensordaten (330) aufgrund der vertikalen oder Neigungsbewegung (M) auszugleichen.

3. Verfahren nach Anspruch 1 oder Anspruch 2, wobei das Fahrzeug in seiner Umgebung durch Umgebungsdaten in einem Fahrzeugkoordinatensystem (110) beschrieben werden kann, das eine feste Beziehung zum Boden (30) aufweist,
**dadurch gekennzeichnet, dass**
der Empfangsschritt (S110) Empfangen von Rohsensordaten (330) als Umgebungsdaten in einem Sensorkoordinatensystem (120) einschließt; und der Kalibrierungsschritt (S120) einschließt:
- einen Schritt des Umwandelns der Rohsensordaten (330) im Sensorkoordinatensystem (120) in die Umgebungsdaten im Fahrzeugkoordinatensystem (110) oder, umgekehrt,
- einen Schritt des Umwandelns der Umgebungsdaten im Fahrzeugkoordinatensystem (110) in die Umgebungsdaten im Sensorkoordinatensystem (120).

4. Verfahren nach einem der Ansprüche 1 bis 3,
**dadurch gekennzeichnet, dass**
die im Empfangsschritt (S110) empfangenen Informationen (310) mindestens eines von Folgendem einschließen: einen oder mehrere Neigungswinkel des Fahrzeugbauteils (14), eine Höhenänderung über dem Boden (30), eine weitere Verschiebung im Verhältnis zu einem anderen Fahrzeugbauteil.

5. Verfahren nach einem der Ansprüche 1 bis 4,
**dadurch gekennzeichnet, dass**
der Empfangsschritt (S110) Empfangen von Informationen von mindestens einem von Folgendem einschließt: einem Nivellierungssensor, einem oder mehreren Beschleunigungssensoren, einem Aufhängungssensor, einem Lastsensor, einer Inertialmesseinheit, dem Umgebungssensor, einem weiteren Umgebungssensor, einem Positionierungssystem, einer Datenbank.

6. Verfahren nach Anspruch 5,
**gekennzeichnet durch**
- Überwachen, während des Betriebs des Fahrzeugs (10), einer Position des Fahrzeugbauteils (14);
- Erfassen der vertikalen oder Neigungsbewegungen (M) des Fahrzeugbauteils (14) im Verhältnis zum Boden (30), die einen vorbestimmten Schwellenwert überschreiten; und
- nach Erkennen der Bewegung (M), Wiederholen der Schritte des Empfangens (S110) und des Kalibrierens (S120) des Umgebungssensors (12).

7. Einrichtung (100) zum Kalibrieren eines Umgebungssensors (12) eines Fahrzeugs (10), wobei der Umgebungssensor (12) dafür konfiguriert ist, Sensordaten (330) zu liefern, und an einem Fahrzeugbauteil (14) montiert ist, das in der Lage ist, eine vertikale oder Neigungsbewegung (M) im Verhältnis zum Boden (30) durchzuführen,
**gekennzeichnet durch:**
- ein Empfangsmodul (210), das dafür konfiguriert ist, Informationen (310) zu empfangen, die auf die vertikale oder Neigungsbewegung (M) hinweisen; und
- ein Kalibrierungsmodul (220), das dafür konfiguriert ist, den Umgebungssensor (12) auf Grundlage der empfangenen Informationen (310) zu kalibrieren, um Modifikationen bei den Sensordaten (330) aufgrund der vertikalen oder Neigungsbewegung (M) auszugleichen.

8. Umgebungssensorsystem für ein Fahrzeug (10),
**gekennzeichnet durch:**
- einen Umgebungssensor (12); und
- eine Einrichtung (100) nach Anspruch 7.

9. Umgebungssensorsystem nach Anspruch 8,
**dadurch gekennzeichnet, dass**
der Umgebungssensor (10) mindestens eines von Folgendem ist: eine oder mehrere Kameras, ein oder mehrere Radargeräte, ein oder mehrere Lidargeräte, ein oder mehrere Ultraschallsensoren.

10. Fahrzeug (10),
**gekennzeichnet durch:**
ein Umgebungssensorsystem nach Anspruch 8 oder Anspruch 9.

11. Fahrzeug (10) nach Anspruch 10, wobei das Fahrzeug ein Nutzfahrzeug ist, das mindestens eines von Folgendem einschließt: einen Lastkraftwagen, ein Zugfahrzeug, einen Anhänger, eine Fahrzeugkombination mit einem Zugfahrzeug und einem Anhänger,
**dadurch gekennzeichnet, dass**
der Umgebungssensor (12) am Anhänger oder am Zugfahrzeug angebracht ist und die Einrichtung (100) am Anhänger oder am Zugfahrzeug angebracht ist.

12. Computerlesbares Speichermedium, das eine Software aufweist, die darauf gespeichert und dafür ausgelegt ist, das Verfahren nach einem der Ansprüche 1 bis 6 durchzuführen, wenn das Computerprogramm auf einer Einrichtung nach Anspruch 8 ausgeführt wird.

## Revendications

1. Procédé d'étalonnage d'un capteur environnemental (12) d'un véhicule (10), le capteur environnemental (12) étant monté sur un composant de véhicule (14) soumis à un mouvement vertical ou d'inclinaison (M) par rapport au sol (30) et configuré pour fournir des données de capteur (330), dans lequel le véhicule (10) est un camion ou un véhicule tracteur ou une remorque ou une combinaison de véhicule avec un véhicule tracteur et une remorque,
**caractérisé par :**
- la réception (S110) d'informations de mouvement (310) indiquant le mouvement vertical ou d'inclinaison (M) ; et
- l'étalonnage (S120) du capteur environnemental (12) sur la base des informations reçues (310) pour compenser des modifications dans les données de capteur (330) dues au mouvement vertical ou d'inclinaison (M),
dans lequel les étapes de réception (S110) d'informations et d'étalonnage (S120) du capteur environnemental (12) sont réalisées lors d'un ou de plusieurs des événements suivants :
- couplage de la remorque au véhicule tracteur,
- chargement de la remorque ou du camion,
- changement d'une suspension d'au moins un parmi un pneu ou un essieu du véhicule (10),
- levage ou abaissement d'au moins un pneu du véhicule (10).

2. Procédé selon la revendication 1, dans lequel le capteur environnemental (12) est pré-étalonné pour une position de montage prédéterminée sur le véhicule (10), le pré-étalonnage étant associé au paramètre d'étalonnage (320),
**caractérisé en ce que**
l'étape d'étalonnage (S120) inclut une étape d'ajustement du paramètre d'étalonnage (320) pour compenser les modifications dans les données de capteur (330) dues au mouvement vertical ou d'inclinaison (M).

3. Procédé selon la revendication 1 ou la revendication 2, dans lequel le véhicule dans son environnement est descriptible par des données environnementales dans un système de coordonnées de véhicule (110) présentant une relation fixe avec le sol (30),
**caractérisé en ce que**
l'étape de réception (S110) inclut la réception de données de capteur brutes (330) sous forme de données environnementales dans un système de coordonnées de capteur (120) ; et
l'étape d'étalonnage (S120) inclut :
- une étape de transformation des données de capteur brutes (330) dans le système de coordonnées de capteur (120) en les données environnementales dans le système de coordonnées de véhicule (110) ou vice versa,
- une étape de transformation des données environnementales dans le système de coordonnées de véhicule (110) en les données environnementales dans le système de coordonnées de capteur (120).

4. Procédé selon l'une quelconque des revendications 1 à 3,
**caractérisé en ce que**
les informations reçues (310) à l'étape de réception (S110) incluent au moins un parmi ce qui suit : un ou plusieurs angles d'inclinaison du composant de véhicule (14), un décalage de hauteur par rapport au sol (30), un autre décalage par rapport à un autre composant de véhicule.

5. Procédé selon l'une quelconque des revendications 1 à 4,
**caractérisé en ce que**
l'étape de réception (S110) inclut la réception d'informations provenant d'au moins un parmi ce qui suit : un capteur de nivellement, un ou plusieurs capteurs d'accélération, un capteur de suspension, un capteur de charge, une unité de mesure inertielle, le capteur environnemental, un autre capteur environnemental, un système de positionnement, une base de données.

6. Procédé selon la revendication 5,
**caractérisé par**
- la surveillance, pendant le fonctionnement du véhicule (10), d'une position du composant de véhicule (14) ;
- la détection des mouvements vertical ou d'inclinaison (M) du composant de véhicule (14) par rapport au sol (30) dépassant un seuil prédéterminé ; et
- lors de la détection du mouvement (M), la répétition des étapes de réception (S110) et d'étalonnage (S120) du capteur environnemental (12).

7. Appareil (100) pour l'étalonnage d'un capteur environnemental (12) d'un véhicule (10), le capteur environnemental (12) étant configuré pour fournir des données de capteur (330) et étant monté sur un composant de véhicule (14) qui est capable de réaliser un mouvement vertical ou d'inclinaison (M) par rapport au sol (30),
**caractérisé par :**
- un module de réception (210) configuré pour recevoir des informations (310) indiquant le mouvement vertical ou d'inclinaison (M) ; et
- un module d'étalonnage (220) configuré pour étalonner le capteur environnemental (12) sur la base des informations reçues (310) pour compenser des modifications dans les données de capteur (330) dues au mouvement vertical ou d'inclinaison (M).

8. Système de capteur environnemental pour un véhicule (10),
**caractérisé par :**
- un capteur environnemental (12) ; et
- un appareil (100) selon la revendication 7.

9. Système de capteur environnemental selon la revendication 8,
**caractérisé en ce que**
le capteur environnemental (10) est au moins un parmi ce qui suit : une ou plusieurs caméras, un ou plusieurs radars, un ou plusieurs lidars, un ou plusieurs capteurs ultrasoniques.

10. Véhicule (10)
**caractérisé par :**
un système de capteur environnemental selon la revendication 8 ou la revendication 9.

11. Véhicule (10) selon la revendication 10, dans lequel le véhicule est un véhicule commercial incluant au moins un parmi ce qui suit : un camion, un véhicule tracteur, une remorque, une combinaison de véhicule avec un véhicule tracteur et une remorque,
**caractérisé en ce que**
le capteur environnemental (12) est installé sur la remorque ou sur le véhicule tracteur, et l'appareil (100) est installé sur la remorque ou sur le véhicule tracteur.

12. Dispositif de stockage lisible par ordinateur sur lequel est stocké un logiciel et conçu pour réaliser le procédé selon l'une quelconque des revendications 1 à 6, lorsque le programme informatique est exécuté sur un appareil selon la revendication 8.
